# EUROPEAN PATENT APPLICATION

(11) **EP 4 480 617 A1**
(43) Date of publication of application: **25.12.2024**
(21) Application number: 24768881.5
(22) Date of filing: 19.04.2024
(51) Int. Cl.: B23K 9/013, B23K 9/29

(54) **TORCH NOZZLE AND TORCH NOZZLE SET**

(30) Priority: 21.04.2023 JP 2023069867
(71) Applicant: Jinno, Taro, Niihama-shi, Ehime 792-0060 (JP)
(72) Inventor: Jinno, Taro, Niihama-shi, Ehime 792-0060 (JP)
(74) Representative: Plasseraud IP
(86) International application number: PCT/JP2024/015593
(87) International publication number: WO 2024/219493

(57) **Abstract**

At a base metal side end of a torch nozzle, discharge groove 14 in an approximately U-shape is formed. A specific gas received from receiving port 13 is discharged from discharge groove 14 in approximately U-shape. Thus, for example, when a surface diameter of a molten pool reaches a predetermined size, the specific gas is discharged to the molten pool by an operator's operation of a remote-controller. As the result, a molten base metal in the molten pool moves on a base metal by discharging the specific gas. It does not adhere to the base metal even if it solidifies on the base metal because of the large temperature difference against the molten base metal when the molten base metal in the molten pool moves over the base metal. Accordingly, when the work of moving the molten base metal in the molten pool by the specific gas (i.e., gouging work for the base metal) is repeated, the base metal can eventually be melted off (or fusion-cut).

## Description

### Technical Field

This invention relates to a torch nozzle and a torch nozzle set comprising multiple torch nozzles used for TIG (Tungsten Inert Gas) welding.

### Background

Listed as common methods of cutting stainless steel are blade cutting (using a grinder, saber saw, or hand saw for example) and fusion cutting (using a plasma cutting machine for example). Among these cutting methods, although plasma cutting is considered superior in terms of work efficiency, it also has disadvantages such that cutting speed rapidly declines as stainless steel becomes thicker, that slag (dross) scatters during cutting, and that a large amount of fume (dust) is generated.

In order to dissolve these disadvantages, a cutting method that can suppress the scattering of slag and the generation of dust is disclosed (see Patent Document 1 for example).

On the other hand, air arc gouging is one of the methods in welding mainly used for back gouging of welds (gouging out penetration defects in the bottom of grooves or the first layer from the back side in butt welding). In air arc gouging, a carbon electrode is attached to an air arc gouging torch, an arc is generated between the electrode and base metal to melt the base metal, and compressed air is blown to blow off the molten base metal, thereby performing gouging.

### Related Art Documents

### Patent Documents

[Patent Document 1] Japanese Unexamined Patent Application Publication No. 2022-112333

### Subject(s) to be Solved

Following the disclosure of the patent document 1, for example, when cutting stainless steel flat plates, it is difficult to move a molten base metal in a molten pool generated by the arc discharge. Even for cylindrical piping, it is difficult to move a molten base metal in a molten pool generated by the arc discharge near the apex of the horizontally installed piping in the same manner as cutting flat plates.

The purpose of the present invention is to provide a torch nozzle that cut-melts the base metal by repeatedly gouging (chipping/scraping) the base metal so as to further utilize existing TIG welding equipment more widely.

### Means to solve the Subject(s)

A torch nozzle of the first aspect of the invention in an approximately cylinder has an accommodating part that accommodates a tungsten electrode to perform arc discharge between it and a base metal, and discharging a shielding gas from a gap between the tungsten electrode and the accommodating part, wherein a receiving port is installed on the torch nozzle, wherein the receiving port receives a specific gas having a different role from the shielding gas, and playing a role of moving a molten base metal, a discharge groove is formed on a base metal side end of the approximately cylinder, and the specific gas is discharged from the discharge groove.

With this configuration, the molten base metal in the molten pool moves over the base metal by discharging the specific gas when the surface diameter of the molten pool that was generated reaches a predetermined size while melting the base metal by arc discharge. When the molten base metal moves on the base metal, it does not adhere to the base metal even if it solidifies on the base metal because of the large temperature difference between the base metal and the molten base metal in the molten pool. Thus, if the work of moving the molten base metal in the molten pool by the specific gas (i.e., gouging the base metal) is repeated, the base metal can eventually be fused-cut ( or melted off).

In regard to a torch nozzle of the second aspect of the invention, a communicating pipe that passes the specific gas from the receiving port to the discharge groove is installed inside an approximately cylindrical wall constituting the approximate cylinder of the torch nozzle.

In regard to a torch nozzle of the third aspect of the invention, the communicating pipe is inclined so as to follow a reduced diameter of the accommodating part that accommodates the tungsten electrode.

In regard to a torch nozzle of the fourth aspect of the invention, the torch nozzle has an accommodating part that accommodates a tungsten electrode to perform arc discharge between it and a base metal, and discharging a shielding gas from a gap between the tungsten electrode and the accommodating part, wherein a receiving port is installed on the torch nozzle, wherein the receiving port receives a specific gas having a different role from the shielding gas, and playing a role of moving a molten base metal, the shielding gas and the specific gas are both inert gases, and the specific gas is discharged together with the shielding gas from a gap between the tungsten electrode and the accommodating part.

In regard to a torch nozzle set of the fifth aspect of the invention, the torch nozzle comprises multiple torch nozzles that includes at least a first torch nozzle and a second torch nozzle, wherein each of the multiple torch nozzles has an accommodating part that accommodates a tungsten electrode to perform arc discharge between it and a base metal and discharges a shielding gas from a gap between the tungsten electrode and the accommodating part, and has a mounting part formed at its rear end that is configured to detachably attached to a common torch, the first torch nozzle has a receiving port installed that receives a specific gas having a different role from the shielding gas, and playing a role of moving a molten base metal, through a specific gas pipeline that is common for the first torch nozzle and the second torch nozzle, wherein a discharge groove is formed on a base metal side end of the approximately cylinder, and the specific gas is discharged from the discharge groove, and the second torch nozzle has a receiving port installed that receives a specific gas having a different role from the shielding gas, and playing a role of moving a molten base metal, through the specific gas pipeline, wherein the shielding gas and the specific gas are both inert gases, and the specific gas is discharged together with the shielding gas from a gap between the tungsten electrode and the accommodating part.

### Advantages of the Present Invention

This invention can provide a torch nozzle that can fusion-cut a base metal by repeatedly gouging the base metal in order to make effective use of an existing TIG welding device.

### Brief Description of the Drawings

Fig. 1 is a perspective view showing a torch nozzle of the first embodiment of this invention.
Fig. 2 is a side view of the torch nozzle from the base metal side end.
Fig. 3 is a plan view of the torch nozzle.
Fig. 4 is the right side view of the torch nozzle.
Fig. 5 is an explanatory diagram showing the configuration of TIG welding.
Fig. 6 includes the first explanatory diagrams showing how the base metal is gouged.
Fig. 7 includes the second explanatory diagrams showing how the base metal is gouged.
Fig. 8 includes an explanatory diagram and a cross-sectional view showing the sate after the base metal is gouged.
Fig. 9 includes explanatory diagrams showing how a thick base metal is gouged.
Fig. 10 is a perspective view of a torch nozzle of the second embodiment of this invention.
Fig. 11 is a cross-sectional view of the torch nozzle shown in Fig. 10.
Fig. 12 is a perspective view of a torch nozzle of the third embodiment of this invention.

### Preferred Embodiment(s) of the Present Invention

Explained below are embodiments of this invention referring to drawings. Note that the embodiments shown below illustrate the torch nozzle and the torch nozzle set for embodying the technical idea of this invention, and this invention is not limited to them. Also, this specification never limits members described in the scope of patent claims to members in the embodiments. Especially, unless a specific description is given, the dimensions, materials, shapes, and relative arrangement of components described in the embodiments are not meant to limit the scope of this invention but are simply explanatory examples. Note that the sizes and positional relationship of members shown in each drawing may be exaggerated for clarifying their explanations. Furthermore, in the explanations below, the same names and codes indicate the same or identical members, and their detailed explanations are omitted as appropriate. Furthermore, multiple elements constituting this invention may be configured of the same member to make one member realize the functions of the multiple elements, or conversely the function of one member may be realized by multiple members taking charge of part of it.

### (First Embodiment)

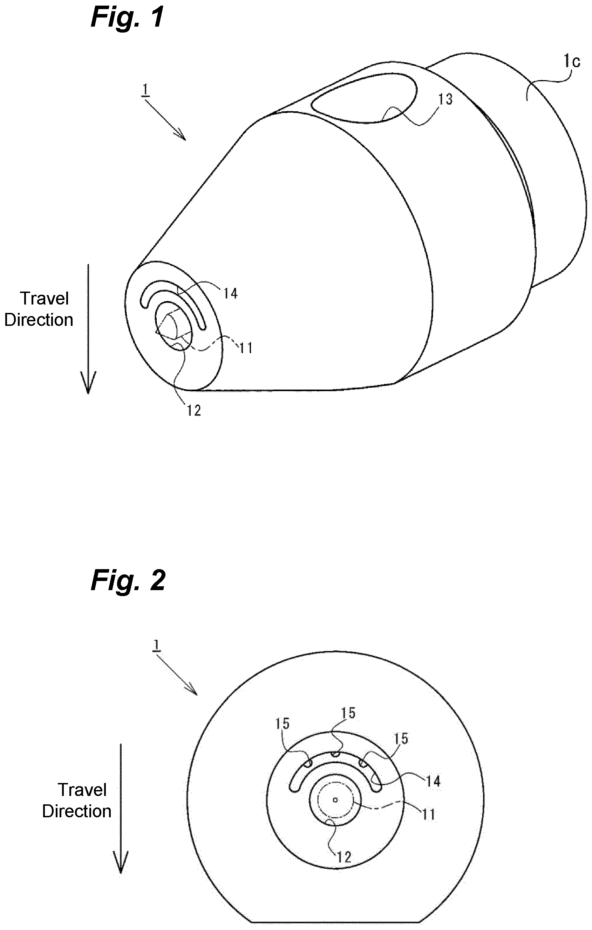

Fig. 1 is a perspective view showing a torch nozzle. As shown in the figure, the torch nozzle 1 is formed in an approximately cylindrical shape made of phosphor bronze. Then, the torch nozzle 1 has an accommodating part 12 formed that accommodates a tungsten electrode 11 to perform arc discharge between it and a base metal, and besides accommodating the tungsten electrode 11, it discharges a shielding gas from a gap between the tungsten electrode 11 and the accommodating part 12. Installed on the top of the torch nozzle 1 is a receiving port 13 to receive a specific gas.

In addition, formed on the base metal side end of the torch nozzle 1 is an approximately U-shaped discharge groove 14. This discharge groove 14 is formed on the rear end side in the travel direction of the torch nozzle 1. The specific gas received through the receiving port 13 is discharged from the approximately U-shaped discharge groove 14.

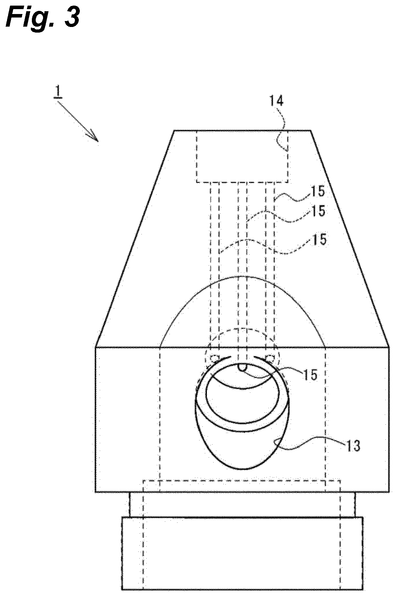

Fig. 2 is a side view of the torch nozzle 1 from the base metal side end. As shown in the figure, installed inside the discharge groove 14 are three communicating pipes 15 extending toward the deep end. Fig. 3 is a plan view of the torch nozzle 1. As shown in the figure, the three communicating pipes 15 are installed inside the approximately cylindrical wall constituting the torch nozzle 1. Then, the three communicating pipes 15 communicate between the receiving port 13 and the discharge groove 14 formed on the base metal side end. Thereby, the specific gas received through the receiving port 13 is discharged from the discharge groove 14 on the base metal side end via the three communicating pipes 15.

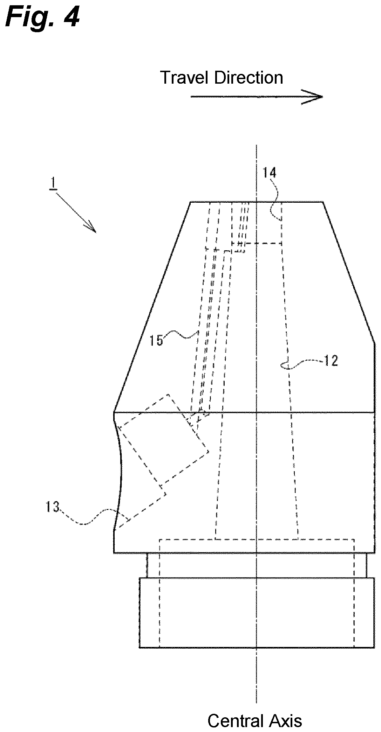

Fig. 4 is the right side view of the torch nozzle 1. As shown in the figure, the accommodating part 12 that accommodates the tungsten electrode 11 (not shown) has its diameter reduced in the shielding gas discharge direction. Thereby, the shielding gas is rectified, improving its shielding effect for the arc. The communicating pipes 15 are inclined toward the accommodating part 12 as they extend toward the base metal side end of the torch nozzle 1. In other words, the communicating pipes 15 are inclined with respect to the central axis of the torch nozzle 1 (one-dot chain line shown in the figure) to follow the reduced diameter of the accommodating part 12. Therefore, the communicating pipes 15 are inclined with respect to the longitudinal direction of the torch nozzle 1. Then, the specific gas received through the receiving port 13 is discharged from the discharge groove 14 via the communicating pipes 15. As the result, the specific gas is discharged from an oblique direction to arc discharge.

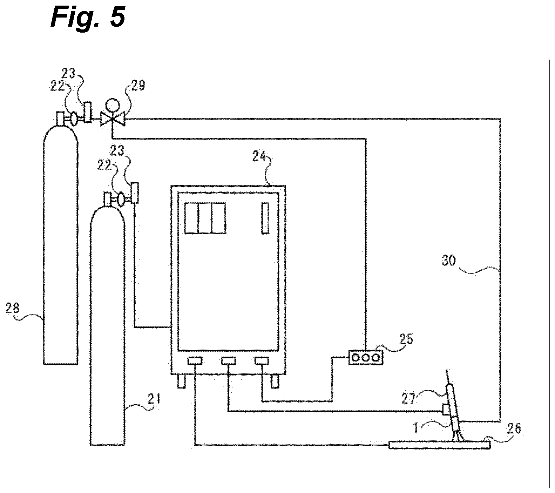

Fig. 5 is an explanatory diagram showing the configuration of TIG welding. As shown in the figure, a gas cylinder 21 is filled with argon gas as the sealing gas. Argon gas supplied from the gas cylinder 21 is connected to a welding power source 24 via a pressure regulator 22 and a flow meter 23. The pressure regulators 22 regulate the gas pressures of argon gases filled in gas cylinders 21 and 28. The flow meters 23 measure the flow rates of argon gases supplied from the gas cylinders 21 and 28. The welding power source 24 supplies the power necessary for TIG welding.

Connected to the welding power source 24 is a remote controller 25 that controls discharging etc. of the sealing gas and the specific gas. In addition, connected to the welding power source 24 is a torch 27 that performs TIG welding to a base metal 26. The torch nozzle 1 is attached to the tip of this torch 27 in a detachable manner. Argon gas that went through the welding power source 24 is supplied to the torch 27 as the sealing gas.

The gas cylinder 28 is filled with argon gas as the specific gas. Argon gas in the gas cylinder 28 is supplied to the torch nozzle 1 via the pressure regulator 22, the flow meter 23, an electromagnetic valve 29, and a specific gas pipeline 30. By operating the remote controller 25, the electromagnetic valve 29 is opened or closed, and the specific gas is discharged from the discharge groove 14 of the torch nozzle 1.

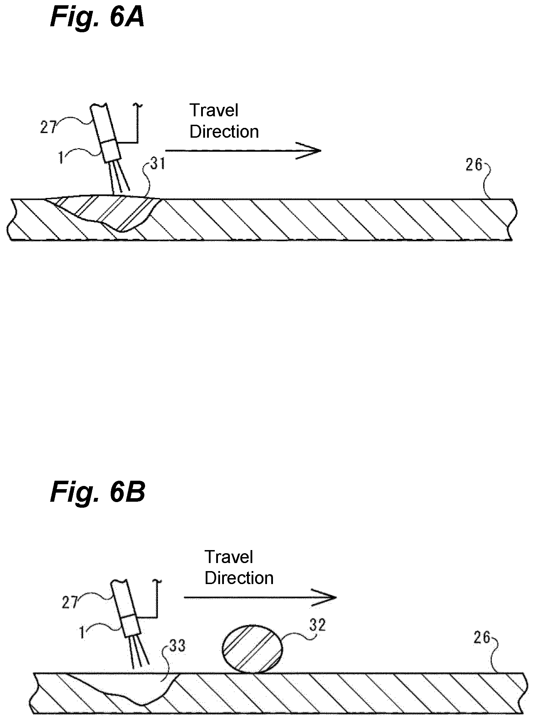

Gouging the base metal in this kind of TIG welding configuration is explained. Fig. 6 includes the first explanatory diagrams showing how the base metal is gouged. As shown in Fig. 6A, as the temperature of the base metal 26 rises due to arc discharge while the torch 27 is inclined, the base metal 26 melts, and eventually a melt pool 31 (shaded with double-oblique lines shown in the figure) is generated.

Then, for example, when the surface diameter of the melt pool 31 has become a specified size, if a worker operates the remote controller 25, the specific gas is discharged to the melt pool 31. In other words, the specific gas is discharged from the discharge groove 14 formed on the base metal side end of the torch nozzle 1. As the result, as shown in Fig. 6B, by discharging the specific gas, a molten base metal 32 of the melt pool 31 moves on the base metal 26. At that time, the discharge force of the specific gas coupled with the expansion force generated by rapid expansion due to arc heat causes the molten base metal 32 to move on the base metal 26. When the molten base metal 32 moves on the base metal 26, because the temperature difference between the molten base metal 32 and the base metal 26 is great, even if it may solidify on the base metal 26, it will not be welded. Once the molten base metal 32 moves from the melt pool 31 in this way, a melt groove 33 is subsequently formed.

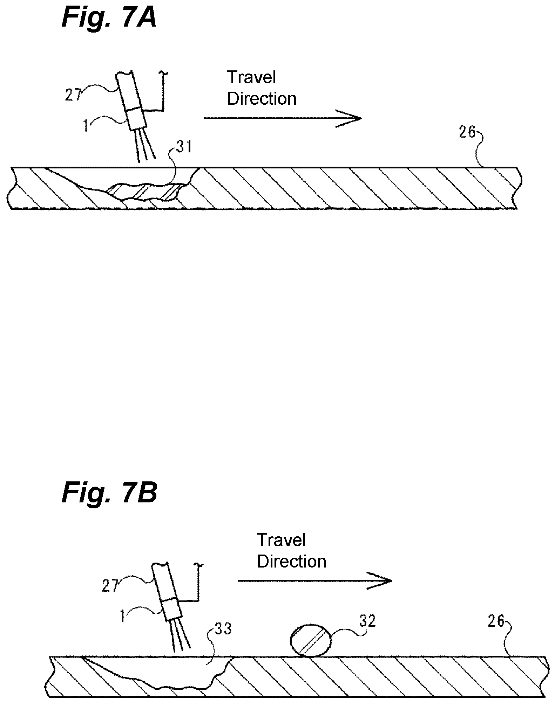

Fig. 7 includes the second explanatory diagrams showing how the base metal is gouged. As shown in Fig. 7A, the torch 27 is moved in the travel direction indicated with an arrow. Once the temperature of the base metal 26 rises at the destination of the movement, the base metal 26 melts, and eventually a melt pool 31 (shaded with double-oblique lines shown in the figure) is generated. For example, when the surface diameter of the melt pool 31 has become a specified size, if the worker operates the remote controller 25, the specific gas is discharged. Then, as shown in Fig. 7B, the molten base metal 32 of the melt pool 31 moves on the base metal 26. At that time, because the temperature difference between the molten base metal 32 and the base metal 26 is great, even if it may solidify on the base metal 26, it will not be welded. Once the molten base metal 32 moves from the melt pool 31 in this way, a melt groove 33 is subsequently formed.

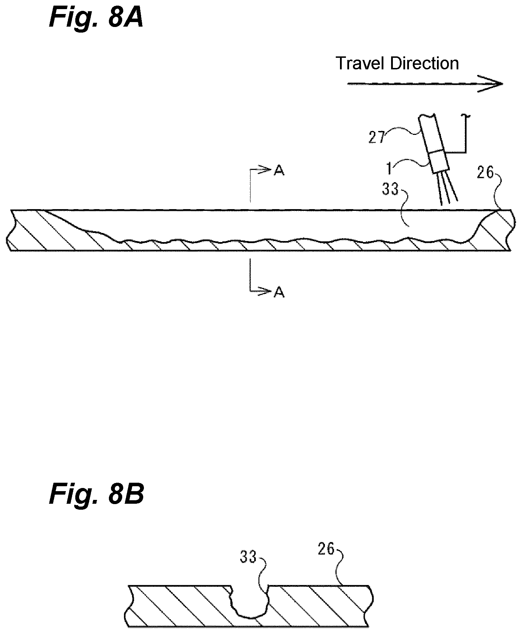

Fig. 8A is an explanatory diagram showing the state after the base metal is gouged. Fig. 8B is a cross-sectional view of the section indicated with line A-A in Fig. 8A. As shown in Figs. 8A and 8B, by repeating the work of moving the molten base metal 32 of the melt pool 31 while moving the torch 27 in the travel direction indicated with an arrow, a long melt groove 33 is formed along the travel direction.

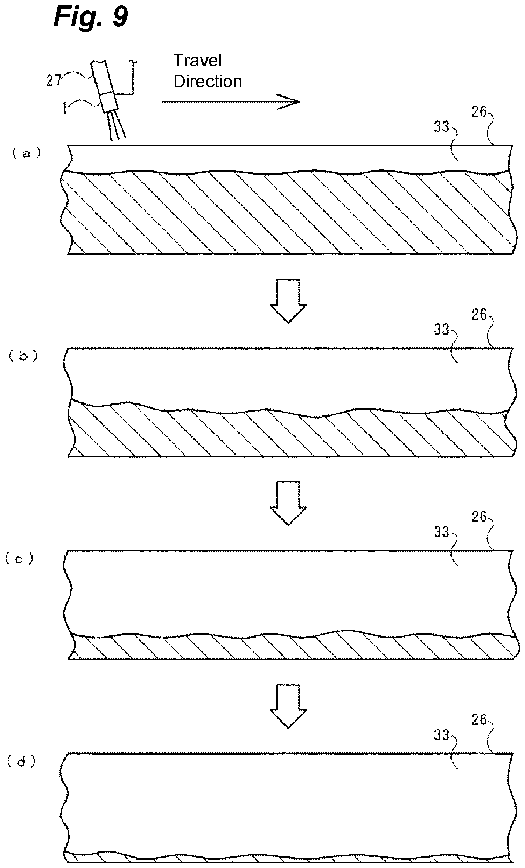

Fig. 9 includes explanatory figures showing how a thick metal base is gouged. As shown in the figure, when melting the thick base metal 26, as shown in Fig. 9A, by performing the work of inclining the torch 27 and moving the molten base metal 32 of the generated melt pool 31 once along the travel direction, the melt groove 33 of a specified depth is formed.

Afterwards, as shown in Fig. 9B-9D, the same work is repeated to the melt groove 33 formed by the previous work. In other words, the base metal 26 is molten in the same position to generate a melt pool 31 again. Then, the generated molten base metal 32 is moved. At that time, the melt groove 33 enhances the effect of the sealing gas. That is, the melt groove 33 can stably maintain arc discharge and also prevent oxidation. By repeating this work, even with the thick base metal 26, a deep melt groove 33 is gradually formed, and eventually the base metal 26 can be fusion-cut.

By this embodiment, the following actions and effects can be obtained.
(1) Formed on the base metal side end of the torch nozzle 1 is the approximately U-shaped discharge groove 14, and the specific gas received through the receiving port 13 is discharged from the approximately U-shaped discharge groove 14. Therefore, for example, when the surface diameter of the melt pool 31 has become a specified size, if the worker operates the remote controller 25, the specific gas is discharged to the melt pool 31. As the result, the molten base metal 32 of the melt pool 31 moves on the base metal 26 by the discharge of the specific gas. At that time, the discharge force of the specific gas coupled with the expansion force generated by rapid expansion due to arc heat causes the molten base metal 32 to move on the base metal 26. When the molten base metal 32 moves on the base metal 26, because the temperature difference between the molten base metal 32 and the base metal 26 is great, even if it may solidify on the base metal 26, it will not be welded. Therefore, by repeating the work of melting the base metal 26 by arc discharge and moving the generated molten base metal 32 of the melt pool 31 by the specific gas, that is, the work of gouging the base metal 26, eventually the base metal 26 can be fusion-cut.
(2) By repeating the generation of the melt pool 31 by arc discharge and the movement of the molten base metal 32 of the melt pool 31 by the specific gas discharge, the melt groove 33 is formed. At that time, heating by arc discharge and momentary cooling by the specific gas discharge are alternately repeated to the base metal 26. Thereby, the thermal expansion of the base metal 26 is suppressed, reducing the roughness inside the melt groove 33. Therefore, the melt groove 33 having a smooth surface and a nearly straight-line tone is formed.
(3) The three communicating pipes 15 communicate with the receiving port 13 and the discharge groove 14 formed on the base metal side end. Thereby, the specific gas received through the receiving port 13 is discharged from the discharge groove 14 on the base metal side end via the three communicating pipes 15. Thereby, even if the specific gas is discharged, it is possible to suppress as much as possible the entrainment of the surrounding air by the specific gas not to weaken the effect of the shielding gas. Therefore, the effect of the shielding gas can be maintained.
(4) Moreover, the discharge groove 14 is formed in an approximate U-shape on the base metal side end of the torch nozzle 1. Thereby, it can enclose the whole of the molten base metal 32 of the melt pool 31 and move the molten base metal 32 as a lump on the base metal 26. In addition, because the discharge groove 14 is formed in an approximate U-shape, the possibility that it affects the shielding gas is extremely low. Therefore, while utilizing the TIG welding function, it can perform gouging and fusion cutting of the base metal 26.
(5) The communicating pipes 15 are inclined with respect to the central axis of the torch nozzle 1 so as to follow the reduced diameter of the accommodating part 12. In other words, the communicating pipes 15 are inclined with respect to the longitudinal direction of the torch nozzle 1. Thereby, the specific gas received through the receiving port 13 is discharged from the discharge groove 14 via the communicating pipes 15. As the result, the specific gas is discharged from an oblique direction to arc discharge. Therefore, the molten base metal 32 of the melt pool 31 is moved on the base metal 26.
(6) The communicating pipes 15 consist of three pieces. Thereby the specific gas received through the receiving port 13 do not remain near the receiving port 13 but are discharged from the discharge groove 14 via the three communicating pipes 15. Therefore, the specific gas is reliably discharged from the discharge groove 14.
(7) If the specific gas is not received through the receiving port 13 to the torch nozzle 1, the torch nozzle 1 has an ordinary TIG welding function. On the other hand, if the specific gas is discharged from the discharge groove 14, by repeating the gouging work to the base metal 26, the base metal 26 can be fusion-cut. Therefore, the torch nozzle 1 has a TIG welding function, a gouging function, and a fusion-cutting function. Therefore, because the torch nozzle 1 can remove the welded part after TIG welding, there is no need to prepare an air arc gouging device. In addition, because an inert gas is used in this process, oxidation and nitridation of the surface of the base metal 26 can be prevented. As the result, there is no need to remove oxidized part or nitrided part, and immediate rewelding can be done.
(8) For example, in repairing an iron material with minor cracks as the base metal 26, when the surroundings of the cracks are shaved using a grinder or the like, iron scraps usually enter the cracks, which sometimes makes it difficult to grasp the depths of the cracks. However, by adopting the method of melting iron in the base metal 26 and moving the molten iron by the specific gas using the torch nozzle 1, due to the surface tension of the molten iron, the molten iron never enters the cracks, thereby the surroundings of the cracks can be reliably removed. In other words, the surroundings of the cracks can be gouged using the torch nozzle 1.
(9) For example, when the surface diameter of the melt pool 31 has become a specified size, the worker operates the remote controller 25. This is based on the inventor's rule of thumb that the surface diameter of the melt pool 31 becomes approximately the same as the depth of the melt pool 31. Thereby, the larger the surface diameter of the melt pool 31 becomes, the deeper the melt pool 31 can be formed. Therefore, based on the surface diameter of the melt pool 31 during the work, the depth of the melt pool 31 and thus the depth of the melt groove 33 can be grasped in advance.

Note that the above-mentioned embodiment may be modified in the following manner.

The material of the torch nozzle 1 may be ceramic, brass, or alumina (aluminum oxide).

The specific gas may be an inert gas containing a trace amount of oxygen. For example, the specific gas may be composed of 98% argon and 2% oxygen. If such a specific gas containing a trace amount of oxygen is used, the base metal is oxidized, and its melting temperature decreases, making the base metal easier to melt. In addition, the viscosity of the molten base metal 32 decreases, which can make the molten base metal 32 easier to flow.

The shielding gas may be an inert gas containing a trace amount of hydrogen. For example, the shielding gas may be composed of 97% argon and 3% hydrogen. If such a shielding gas containing a trace amount of hydrogen is used, arc heat is more easily transferred to the base metal 26, increasing the size and depth of the melt pool 31. As the result, TIG welding and melting the base metal 26 can be performed faster.

The remote controller for the worker to have the specific gas discharged from the discharge groove 14 may be installed on the torch 27. If configured in this way, the worker can easily control the timing to have the specific gas discharged while still holding the torch 27.

The specific gas may be discharged from the discharge groove 14 when the temperature of the melt pool 31 has reached the specified temperature detected with a temperature sensor or an infrared sensor. If configured in this way, the worker does not need to operate a remote controller for having the specific gas discharged from the discharge groove 14, therefore the remote controller for having the specific gas discharged can be omitted.

The shielding gas and the specific gas may branch from one gas cylinder. In other words, if the same inert gas as the shielding gas is adopted as the specific gas, the shielding gas and the specific gas may branch from the gas cylinder 21, therefore there is no need to prepare a separate specific gas, making the configuration simpler.

The discharge groove 14 may be formed in an approximate V-shape.

The discharge groove 14 may be formed of multiple small-diameter parts arranged in an approximate U-shape or V-shape as the whole.

### (Second Embodiment)

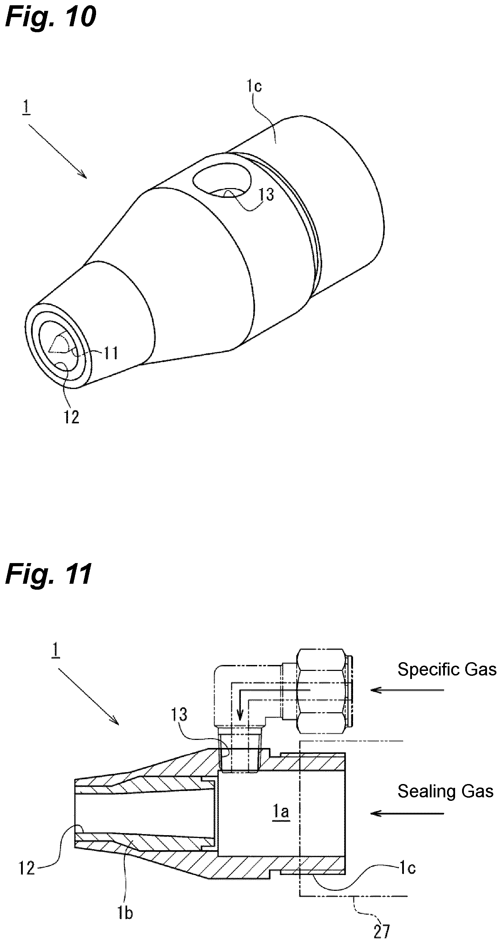

Figs. 10 and 11 show a torch nozzle of the second embodiment of this invention. As shown in Fig. 10, formed on the torch nozzle 1 of the second embodiment is an accommodating part 12 that accommodates a tungsten electrode 11 to perform arc discharge between it and a base metal 26, and installed on the top of the torch nozzle 1 is a receiving port 13 that receives a specific gas.

As shown in Fig. 11, the accommodating part 12 and the receiving port 13 are connected with a hollow part 1a of the torch nozzle 1. In addition, the above-mentioned shielding gas and the above-mentioned specific gas are both argon gas. The above-mentioned specific gas is discharged together with the above-mentioned shielding gas from a gap between the tungsten electrode 11 and the accommodating part 12 via the hollow part 1a. This point is the main difference between this embodiment and the above-mentioned embodiment. In this embodiment, the torch nozzle 1 has an inner cylinder 1b made of ceramic formed in an approximately cylindrical shape on the inner circumference.

During arc discharge, the shield gas is constantly supplied from the torch 27 to the hollow part 1a of the torch nozzle 1, and when the molten base metal 32 of the melt pool 31 is moved, the specific gas is supplied to the receiving port 13. The specific gas is adjusted to have a necessary pressure so that the molten base metal 32 can be blown away, and the specific gas supplied to the receiving port 13 is mixed with the shielding gas inside the hollow part 1a, which is discharged from the gap between the tungsten electrode 11 and the accommodating part 12 via the hollow part 1a.

Although the torch nozzle 1 shown in Fig. 1 is effective if the base metal is a metal such as stainless steel that generates a relatively small amount of spatter, if the base metal is a metal that generates a relatively large amount of spatter, such as carbon steel, cast iron, and other metal containing a large amount of impurities, spatter generated during arc discharge welds on the opening of the U-shaped discharge groove 14, blocking the discharge groove 14, thereby the torch nozzle can easily become unusable in a relatively short time. However, according to the torch nozzle 1 shown in Fig. 10 of this second embodiment, even if the base metal generates a relatively large amount of spatter, such as carbon steel, cast iron, or other metal containing a large amount of impurities, because the gap between the tungsten electrode 11 and the accommodating part 12 can be made relatively large, the above-mentioned gap is not easily blocked by spatter, providing a torch nozzle that can be used for a long time.

### (Third Embodiment)

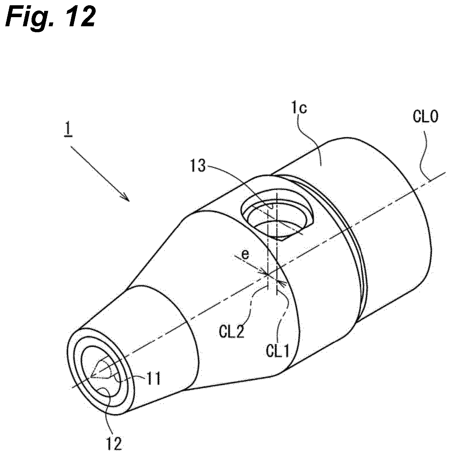

Fig. 12 show a torch nozzle of the third embodiment of this invention. As shown in Fig. 12, a receiving port 13 of a torch nozzle 1 of the third embodiment is formed shifted so as not to intersect with the longitudinal central axis CL0 of the torch nozzle 1. In other words, the central axis CL1 of the receiving port 13 is shifted in the radial direction by a specified amount e from the central axis CL2 that is parallel to the central axis CL1 and passes through the longitudinal central axis CL0 of the torch nozzle. This generates a swirling flow of the specific gas that rotates around a tungsten electrode 11 and moves toward its tip side, increasing the flow velocity of the specific gas, thereby the discharged specific gas increases its force to blow away a molten base metal 32. Therefore, the base metal can be effectively gouged while suppressing the amount of consumed specific gas.

### (Torch Nozzle Set)

According to this invention, in order to allow a gouging work with a single torch 27 regardless of whether the base metal is a metal that generates a relatively small amount of spatter or a metal that generates a relatively large amount of spatter, it is recommended to prepare a torch nozzle set comprising multiple torch nozzles including a first torch nozzle that becomes the attachment for the base metal having a small amount of spatter and a second torch nozzle that becomes the attachment for the base metal having a large amount of spatter.

In this torch nozzle set, the torch nozzle 1 shown in Fig. 1 is used as the above-mentioned first torch nozzle, and the torch nozzle 1 shown in Fig. 10 or 12 is used as the above-mentioned second torch nozzle.

As shown in Figs. 1, 10, and 12, provided at the rear end of each torch nozzle 1 is a mounting part 1c for mounting it on the tip of the torch 27, and a male thread of the same standard is formed on each mounting part 1c. In addition, installed at the tip the torch 27 is a hole where a female thread that fits the mounting part 1c is formed, and each torch nozzle 1 can be individually attached to or detached from the tip of the torch 27.

Each of the torch nozzles 1 shown in Figs. 10 and 12 receives the specific gas supply to its receiving port 13 from a specific gas pipeline 30 that connects to an electromagnetic valve 29 shown in Fig. 5 in the same manner as the torch nozzle 1 shown in Fig. 1. In other words, the specific gas pipeline 30 is common for the torch nozzles 1 shown in Figs. 1, 10, and 12. Installed on the receiving port 13 of each of the torch nozzles 1 shown in Figs. 10 and 12 is a pipe joint as shown in two-dot chain lines, and this pipe joint and the specific gas pipeline 30 can be joined in a separable manner as appropriate. Then, also installed on the receiving port 13 of the torch nozzle 1 shown in Fig. 1 is a pipe joint of the same standard as those in Figs. 10 and 12, and this pipe joint and the specific gas pipeline 30 can be joined in a separable manner as appropriate. Part of the specific gas pipeline 30 that is close to the pipe joint should desirably be a hose having flexibility. In order to join the specific gas pipeline 30 and the receiving port 13 in a separable manner as appropriate, for example, a coupler joint may be installed in the middle of the specific gas pipeline 30 as necessary.

This torch nozzle set may include, for example, torch nozzles having lengths appropriate for their gouging depths of the base metal. Then, each of these torch nozzles has an accommodating part that accommodates a tungsten electrode to perform arc discharge between it and the base metal, and discharges a shielding gas from a gap between the tungsten electrode and the accommodating part in the same manner as the torch nozzles 1 shown in Figs. 1, 10, and 12, where a mounting part is formed at the rear end of the torch nozzle to allow mounting on the above-mentioned one torch.

Torch nozzles constituting the torch nozzle set are stored in a common toolbox, for example, and a torch nozzle according to the purpose of using the torch is mounted on the tip of the torch 27. If a torch nozzle not fitting the purpose of use is mounted on the torch 27, the torch nozzle is removed from the torch 27 and is replaced with the one fitting the purpose of use.

The technical ideas grasped by the above-mentioned embodiments are described below along with their effects.
[1] In the torch nozzles according to Claims 1 through 4,
   a torch nozzle that functions as an ordinary TIG welding torch nozzle if the specific gas is not received through the above-mentioned receiving port.
   If configured in this manner, a torch nozzle having a TIG welding function, a gouging function, and a fusion-cutting function can be provided.
[2] A TIG welding device equipped with the torch nozzles according to Claims 1 through 4 or the above [1].

If configured in this manner, a TIG welding device equipped with a TIG welding function, a gouging function, and a fusion-cutting function can be provided. Here, as shown in Fig. 5, this TIG welding device is equipped with the electromagnetic valve 29 for cutting and continuing the supply of the specific gas to the specific gas pipeline 30 and the remote control device 25 for opening and closing the electromagnetic valve 29, and instead of configuring it so that the electromagnetic valve 29 can be freely opened or closed by manually operating the remote control device 25, it may better be configured so that a control device for program-controlling the opening and closing of the electromagnetic valve 29 is provided, and that the electromagnetic valve 29 can be freely opened or closed through the program control by this control device. The above-mentioned control device may be, for example, equipped with a setting unit that sets the lengths of time from the opening to the closing of the electromagnetic valve 29 and time from the closing to the opening of the electromagnetic valve 29, and a timer unit that periodically repeats opening and closing the electromagnetic valve according to the set values of the setting unit, where the opening-closing cycle may further be automatically varied according to the moving speed of the torch nozzle, and yet further by preparing supply sources of a high-pressure specific gas and a low-pressure specific gas, the electromagnetic valve 29 may be switched according to the lengths of their individually set opening-closing cycles, time from the opening to the closing of the electromagnetic valve 29, and time from the closing to the opening of the electromagnetic valve 29. Thereby, in this TIG welding device, because the electromagnetic valve can be opened for only the necessary time for moving the molten base metal 32, the amount of consumed specific gas can be saved. In addition, in this TIG welding device, because the opening and closing of the electromagnetic valve by the program control allows suitable supply of the specific gas according to the work, the work efficiency can be improved.

### Legends

1: Torch nozzle, 1a: Hollow part, 1b: Inner cylinder, 1c: Mounting part, 11: Tungsten electrode, 12: Accommodating part, 13: Receiving port, 14: Discharge groove, 15: Communicating pipes, 21: Gas cylinder, 22: Pressure regulators, 23: Flow meters, 24: Welding power source, 25: Remote controller, 26: Base metal, 27: Torch, 28: Gas cylinder, 29: Electromagnetic valve, 30: Specific gas pipeline, 31: Melt pool, 32: Molten base metal, 33: Melt groove

## Claims

1. A torch nozzle in an approximately cylinder, having an accommodating part that accommodates a tungsten electrode to perform arc discharge between it and a base metal, and discharging a shielding gas from a gap between the tungsten electrode and the accommodating part, wherein
a receiving port is installed on the torch nozzle, wherein the receiving port receives a specific gas having a different role from the shielding gas, and playing a role of moving a molten base metal,
a discharge groove is formed on a base metal side end of the approximately cylinder, and
the specific gas is discharged from the discharge groove.

2. The torch nozzle according to Claim 1, wherein
a communicating pipe that passes the specific gas from the receiving port to the discharge groove is installed inside an approximately cylindrical wall constituting the approximate cylinder of the torch nozzle.

3. The torch nozzle according to Claim 2, wherein
the communicating pipe is inclined so as to follow a reduced diameter of the accommodating part that accommodates the tungsten electrode.

4. A torch nozzle in an approximately cylindrical shape, having an accommodating part that accommodates a tungsten electrode to perform arc discharge between it and a base metal, and discharging a shielding gas from a gap between the tungsten electrode and the accommodating part, wherein
a receiving port is installed on the torch nozzle, wherein the receiving port receives a specific gas having a different role from the shielding gas, and playing a role of moving a molten base metal,
the shielding gas and the specific gas are both inert gases, and
the specific gas is discharged together with the shielding gas from a gap between the tungsten electrode and the accommodating part.

5. A torch nozzle set comprising multiple torch nozzles that includes at least a first torch nozzle and a second torch nozzle, wherein
each of the multiple torch nozzles
has an accommodating part that accommodates a tungsten electrode to perform arc discharge between it and a base metal and discharges a shielding gas from a gap between the tungsten electrode and the accommodating part, and
has a mounting part formed at its rear end that is configured to detachably attached to a common torch,
the first torch nozzle has a receiving port installed that receives a specific gas having a different role from the shielding gas, and playing a role of moving a molten base metal, through a specific gas pipeline that is common for the first torch nozzle and the second torch nozzle, wherein
a discharge groove is formed on a base metal side end of an approximately cylinder, and
the specific gas is discharged from the discharge groove, and
the second torch nozzle has a receiving port installed that receives a specific gas having a different role from the shielding gas, and playing a role of moving a molten base metal, through the specific gas pipeline, wherein
the shielding gas and the specific gas are both inert gases, and
the specific gas is discharged together with the shielding gas from a gap between the tungsten electrode and the accommodating part.
